# EUROPÄISCHE PATENTSCHRIFT

(11) **EP 1 277 973 B1**
(45) Veröffentlichungstag und Bekanntmachung des Hinweises auf die Patenterteilung: **30.11.2005**
(21) Anmeldenummer: 02405572.5
(22) Anmeldetag: 08.07.2002
(51) Int. Cl.: F16B 13/12, F16B 37/08, F16B 13/08

(54) **Spreizdübel**
Expansion dowel
Cheville à expansion

(30) Priorität: 17.07.2001 DE 10134605
(43) Veröffentlichungstag der Anmeldung: 22.01.2003
(73) Patentinhaber: HILTI Aktiengesellschaft, 9494 Schaan (LI)
(72) Erfinder: Bisping, Heinz, 86163 Augsburg (DE); Kölbl, Alois, 86807 Buchloe (DE); Wieser, Jürgen, 86916 Kaufering (DE); Zimmerer, Claudia, 86153 Augsburg (DE)
(74) Vertreter: Wildi, Roland

(56) Entgegenhaltungen:
- DE-A- 2 316 163
- DE-A- 3 437 846
- DE-U- 7 538 457
- GB-A- 1 321 479
- US-A- 5 957 643

## Beschreibung

Die Erfindung betrifft ein Befestigungselement mit einem, eine innenprofilierte Bohrung aufweisenden, zylinderförmigen Spreizkörper, der axial in zumindest zwei Segmente geteilt ist und dessen Aussenkontur zumindest ein Zusatzspreizelement aufweist, das in einer, mit in Setzrichtung radial zum Spreizkörper abnehmenden Tiefe an der Aussenkontur angeordneten Ausnehmung verschiebbar gelagert ist, wobei das Zusatzspreizelement zumindest teilweise eine grössere radiale Ausdehnung aufweist als die maximale Tiefe der Ausnehmung.

Befestigungselemente der genannten Art werden in verschiedensten Anwendungen verwendet, beispielsweise als Einschlagdübel in einem harten Untergrund, wie Beton oder dergleichen. Zuerst wird jeweils im Untergrund ein Bohrloch erstellt, in welches das Befestigungselement beispielsweise schlagend, eingesetzt wird. Zur Verspreizung des Befestigungselementes im Bohrloch und zur Lastaufnahme findet beispielsweise ein in Setzrichtung in die Bohrung des Spreizkörpers einführbarer Bolzen Anwendung. Dabei weist der Bolzen vorteilhafterweise etwa den gleichen Durchmesser auf wie die Bohrung des Spreizkörpers.

Ein Befestigungselement der genannten Art ist beispielsweise aus der DE 7538457 U bekannt, das einen mehrteilig ausgebildeten Spreizkörper aufweist, dessen Segmente durch Gelenke miteinander verbunden sind.

Nachteilig bei diesem bekannten Befestigungselement ist der Umstand, dass der Setzvorgang sich unhandlich gestaltet, da es während des Setzvorgangs nicht an einem Lastangriffmittel, beispielsweise einem Bolzen mit einer Aussenprofilierung festlegbar ist.

Aus der DE 23 16 163 A ist ein Befestigungselement mit einem Schaft bekannt, der an dem in Setzungsrichtung liegenden Ende eine sich in Längsrichtung erstreckende, geneigte Ausnehmung und eine Einschnappausnehmung aufweist. Des Weiteren umfasst das Befestigungselement einen gleitend in der Ausnehmung angeordneten Keil, der über teilweise die Einschnappausnehmung umgreifende Arme an dem Schaft gehalten ist. Wird das Befestigungselement verspannt, gleitet der Keil entlang des Schaftes, wobei dieser in die Bohrlochwandung gedrückt wird.

Der vorliegenden Erfindung liegt die Aufgabe zugrunde, ein Befestigungselement mit einem mehrteiligen Spreizkörper zu schaffen, das sowohl handlich in der Anwendung ist, als auch hohe Lastwerte aufweist. Zudem soll das Befestigungselement auch wirtschaftlich in der Herstellung sein.

Erfindungsgemäss wird die Aufgabe dadurch gelöst, dass benachbarte Segmente durch Verbindungselemente verbindbar sind.

Dadurch, dass benachbarte Segmente des Befestigungselements durch ein oder mehrere Verbindungselemente verbindbar sind, ist eine Vormontage desselben möglich. Gelangt beispielsweise eine Ankerstange zur Anwendung, so stellen die Verbindungselemente sicher, dass das Befestigungselement axial unverschieblich auf der Ankerstange festlegbar ist. Damit ist gewährleistet, dass ein Anwender beim Setzvorgang, das Befestigungselement beispielsweise nicht festhalten muss. Ferner gewährleistet das erfindungsgemässe Befestigungselement dadurch die Möglichkeit einer genauen Positionierung desselben beispielweise auf einer Ankerstange oder dergleichen, während des Setzvorgangs. In einer bevorzugten Art und Weise sind alle benachbarten Segmente miteinander verbindbar.

Vorzugsweise sind die Verbindungselemente als Schnappverschluss ausgebildet, um eine sichere und wirtschaftliche Verbindung sicherzustellen. In einer bevorzugten Ausführung ist der Schnappverschluss lösbar ausgebildet. Selbstverständlich lassen sich anstelle des Schnappverschlusses auch andere Verbindungselemente anwenden, wie beispielsweise eine reibschlüssige oder chemische Verbindung.

Vorteilhafterweise weist ein erstes Segment zumindest ein Hakenelement auf, das in einen formschlüssigen Eingriff mit jeweils einer, an einem zweiten benachbarten Segment angeordneten, Ausnehmung bringbar ist. Die Verwendung eines Hakenelements und einer Ausnehmung stellt einerseits wirtschaftliche Herstellung des Befestigungselements sicher und bildet andererseits eine formschlüssige Verbindung zwischen den beiden Segmenten. Je nach Auslegung des Hakenelements und der Ausnehmung liegt eine lösbare Verbindung vor oder nicht.

Die Segmente sind vorzugsweise halbschalenförmig ausgebildet, um eine zweiteilige Ausbildung des Spreizkörpers zu erhalten und dadurch die Anwendung des Befestigungselements zu erleichtern.

Vorteilhafterweise bestehen die Segmente und das Zusatzspreizelement aus Kunststoff.

Die Segmente und das Zusatzspreizelement bestehen vorzugsweise aus Metall, falls das Befestigungselement besonderen Anforderungen, beispielsweise Brandschutz, genügen muss.

In einer weiteren bevorzugten Ausführung bestehen die Segmente und das Zusatzspreizelement aus Metall und sind mit Kunststoff umspritzt, um das Ausbilden der Verbindungselemente herstellungstechnisch einfach zu gestalten. Somit ist sichergestellt, dass die Verbindungselemente, beispielsweise Schnappverschlüsse, beim Umspritzen mit Kunststoff herstellungstechnisch einfach anformbar sind.

Die Erfindung wird nachstehend anhand eines Ausführungsbeispieles näher erläutert. Es zeigen:
- Fig. 1: eine perspektivische Ansicht des erfindungsgemässen Befestigungselementes mit nicht verbundenen Segmenten;
- Fig. 2: eine perspektivische Ansicht des in Fig. 1 dargestellten Befestigungselementes mit verbundenen Segmenten;
- Fig. 3: einen Längsschnitt des in Fig. 1 dargestellten Befestigungselementes im gesetzten Zustand.

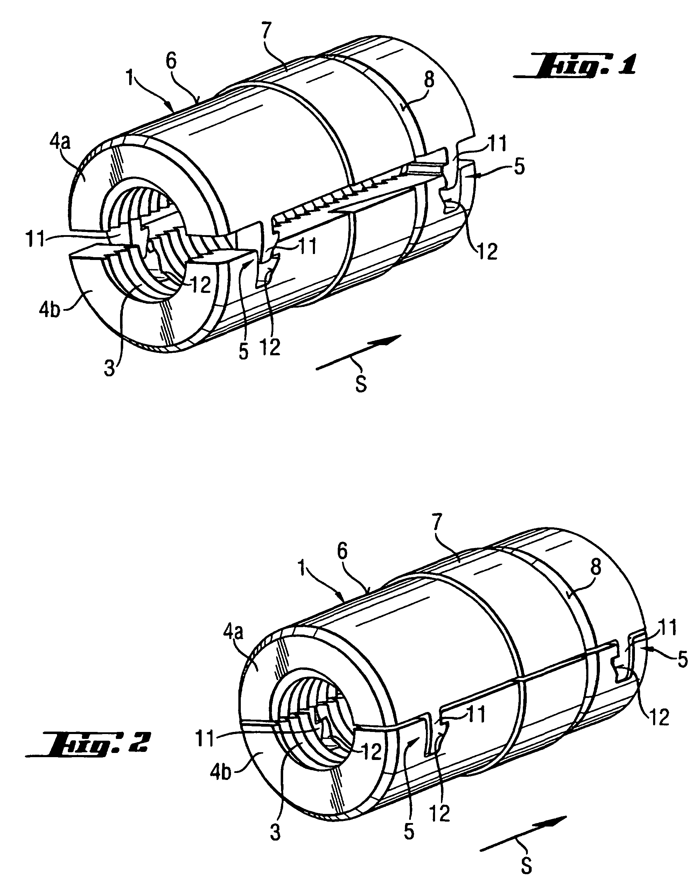

In den Fig.1 bis 3 ist eine mögliche Ausführungsform des erfindungsgemässen Befestigungselements mit einem, insgesamt mit 1 bezeichneten, zylinderförmigen Spreizkörper mit einer axial verlaufenden Bohrung 3 und in einer Ausnehmung 8 angeordnetes Zusatzspreizelement 7 dargestellt.

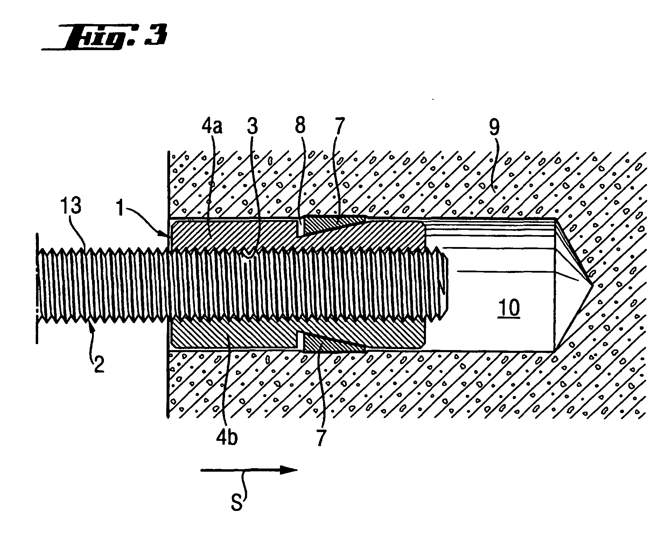

Der Spreizkörper 1 ist in dieser Ausführungsform in zwei, durch Verbindungselemente 5 miteinander gelenkig verbundene, Segmente 4a, 4b unterteilt, wie dies insbesondere in Fig. 1 dargestellt ist. Etwa axial mittig weist der Spreizkörper 1 eine über die gesamte Aussenkontur 6 verlaufende keilförmige Ausnehmung 8 auf. Die Form der Ausnehmung 8 ist derart ausgebildet, dass die radiale Tiefe der Ausnehmung 8 in Setzrichtung S abnimmt, wie dies insbesondere aus der Fig. 3 hervorgeht. Somit weist das in Setzrichtung S abgewandte Ende der Ausnehmung 8 die grösste Tiefe auf und dient zugleich als ein in entgegen der Setzrichtung S wirkender Anschlag für das Zusatzspreizelement 7. Die Bohrung 3 weist eine Innenprofilierung auf, die beispielsweise als Innengewinde ausgebildet ist.

Das Zusatzspreizelement 7 weist einen keilförmigen Querschnitt derart auf, dass es in die Ausnehmung 8 bringbar ist. Dabei ist die maximale radiale Ausdehnung des Zusatzspreizkörpers 7 geringfügig grösser ausgebildet als die maximale Tiefe der Ausnehmung 8, so dass das Zusatzspreizelement 7 den Spreizkörper 1 radial geringfügig überragt.

In Fig. 3 ist das Befestigungsmittel in einem mit einem Bohrloch 10 versehenen Untergrund 9 im gesetzten Zustand dargestellt. Zur Verspreizung und als Lastangriffsmittel ist in die Bohrung 3 des Spreizkörpers 1 ein als Bolzen 2 ausgebildetes Spreizelement eingeführt. Durch die konusförmig verlaufende Ausnehmung 8 tritt bei einer Belastung des Bolzens 2 entgegen der Setzrichtung S ein Nachspreizen ein. Der Bolzen 2 weist vorzugsweise eine Aussenprofilierung 13, insbesondere Aussengewinde, auf, um zwischen dem Bolzen 2 und dem Spreizkörper 1 eine formschlüssige Verbindung zu erhalten.

Die Verbindungselemente 5 sind als Schnappverbindungen ausgebildet, wobei ein Segment 4a ein Hakenelement 11 aufweist, das in einen formschlüssigen Eingriff mit einer an dem zweiten Segment 4b angeordneten, Ausnehmung 12 bringbar ist. Fig.1 zeigt das Befestigungselement im offenen Zustand, in dem das Hakenelement 11 nicht im Eingriff mit der Ausnehmung 12 ist. In den Fig. 2 und 3 ist das Befestigungselement im geschlossen Zustand, in dem die beiden Hakenelemente 11 die beiden Ausnehmungen 12 formschlüssig hintergreifen.

Beim Setzvorgang werden die beiden Segmente 4a, 4b derart auf den Bolzen 2 gedrückt, dass die beiden Segmente 4a, 4b diesen über den gesamten Umfang umgreifen. Durch das Zusammendrücken der beiden Segmente 4 werden einerseits die beiden Hakenelemente 11 in den formschlüssigen Eingriff mit den Ausnehmungen 12 gebracht, wie dies in Fig. 2 allerdings ohne Bolzen 2 dargestellt ist, und andererseits greift die Innenprofilierung der Bohrung 3 in eine Aussenprofilierung 13 des Bolzens 2. Damit besteht zwischen dem Befestigungselement und dem Bolzen 2 eine formschlüssige Verbindung. Danach wird der Bolzen 2 mit dem Befestigungselement in das Bohrloch 10 eingeführt. Liegt nun eine, entgegen die Setzrichtung S wirkende Last auf, so verkeilt sich der Spreizkörper 1 mit dem Zusatzspreizelement 7.

## Patentansprüche

1. Befestigungselement mit einem, eine innenprofilierte Bohrung (3) aufweisenden, zylinderförmigen Spreizkörper (1), der axial in zumindest zwei Segmente (4a, 4b) geteilt ist und dessen Aussenkontur (6) zumindest ein Zusatzspreizelement (7) aufweist, das in einer, mit in Setzrichtung (S) radial zum Spreizkörper (1) abnehmenden Tiefe an der Aussenkontur (6) angeordneten Ausnehmung (8) verschiebbar gelagert ist, wobei das Zusatzspreizelement (7) zumindest teilweise eine grössere radiale Ausdehnung aufweist als die maximale Tiefe der Ausnehmung (8), wobei benachbarte Segmente (4a, 4b) durch Verbindungselemente verbindbar sind.

2. Befestigungselement nach Anspruch 1, **dadurch gekennzeichnet, dass** die Verbindungselemente als Schnappverschluss (5) ausgebildet sind.

3. Befestigungselement nach Anspruch 1 oder 2, **dadurch gekennzeichnet, dass** ein erstes Segment (4a) zumindest ein Hakenelement (11) aufweist, das in einen formschlüssigen Eingriff mit jeweils einer, an einem zweiten benachbarten Segment (4b) angeordneten, Ausnehmung (12) bringbar ist.

4. Befestigungselement nach einem der Ansprüche 1 bis 3, **dadurch gekennzeichnet, dass** die Segmente (4a, 4b) halbschalenförmig ausgebildet sind.

5. Befestigungselement nach einem der Ansprüche 1 bis 4, **dadurch gekennzeichnet, dass** die Segmente (4a, 4b) und das Zusatzspreizelement (7) aus Kunststoff bestehen.

6. Befestigungselement nach einem der Ansprüche 1 bis 5, **dadurch gekennzeichnet, dass** die Segmente (4a, 4b) und das Zusatzspreizelement (7) aus Metall bestehen.

7. Befestigungselement nach einem der Ansprüche 1 bis 4, **dadurch gekennzeichnet, dass** die Segmente (4a, 4b) und das Zusatzspreizelement (7) aus Metall bestehen und mit Kunststoff umspritzt sind.

## Claims

1. Fixing element comprising a cylindrical expansion body (1) with internal profiled bore (3) which is axially divided into at least two segments (4a, 4b) and the outside contour (6) of which comprises at least one additional expansion element (7) which is displaceably mounted on the outside contour (6) at a depth which decreases in the setting direction (S) radially to the expansion body (1), and the additional expansion element (7) comprises at least partially a larger radial expansion than the maximum depth of the cutout (8), and adjacent segments (4a, 4b) are connectible by way of connecting elements.

2. Fixing element according to Claim 1, **characterised in that** the connecting elements are designed as snap-on closures (5).

3. Fixing element according to Claim 1 or 2, **characterised in that** a first segment (4a) comprises at least one hook element (11) which is positively engaged with a respective cutout (12) arranged on a second adjacent segment (4b).

4. Fixing element according to one of Claims 1 to 3, **characterised in that** the segments (4a, 4b) are of semispherical shape.

5. Fixing element according to one of Claims 1 to 4, **characterised in that** the segments (4a, 4b) and the additional expansion element (7) are made of plastic material.

6. Fixing element according to one of Claims 1 to 5, **characterised in that** the segments (4a, 4b) and the additional expansion element (7) are made of metal.

7. Fixing element according to one of Claims 1 to 4, **characterised in that** the segments (4a, 4b) and the additional expansion element (7) are made of metal and are coated with plastic material.

## Revendications

1. Élément de fixation avec un corps d'expansion cylindrique (1) qui est pourvu d'un trou profilé intérieurement (3), qui est divisé axialement en au moins deux segments (4a, 4b) et dont le contour extérieur (6) comporte au moins un élément d'expansion supplémentaire (7), lequel est logé avec une possibilité de déplacement dans un évidement (8) ménagé dans le contour extérieur (6) avec une profondeur décroissant dans le sens radial par rapport au corps d'expansion (1) dans la direction de scellement (S), l'élément d'expansion supplémentaire (7) présentant au moins partiellement une extension radiale supérieure à la profondeur maximale de l'évidement (8), des segments voisins (4a, 4b) pouvant être reliés par l'intermédiaire d'éléments de liaison.

2. Élément de fixation selon la revendication 1, **caractérisé en ce que** les éléments de liaison forment une fermeture à encliquetage (5).

3. Élément de fixation selon la revendication 1 ou 2, **caractérisé en ce qu'**un premier segment (4a) comporte au moins un élément en crochet (11) qui peut être amené en prise par complémentarité de formes avec un évidement (12) ménagé dans un second segment voisin respectif (4b).

4. Élément de fixation selon une des revendications 1 à 3, **caractérisé en ce que** les segments (4a, 4b) sont conformés en demi-coques.

5. Élément de fixation selon une des revendications 1 à 4, **caractérisé en ce que** les segments (4a, 4b) et l'élément d'expansion supplémentaire (7) sont réalisés en matière plastique.

6. Élément de fixation selon une des revendications 1 à 5, **caractérisé en ce que** les segments (4a, 4b) et l'élément d'expansion supplémentaire (7) sont réalisés en métal.

7. Élément de fixation selon une des revendications 1 à 4, **caractérisé en ce que** les segments (4a, 4b) et l'élément d'expansion supplémentaire (7) sont réalisés en métal et enrobés de matière plastique.
